# EUROPÄISCHE PATENTSCHRIFT

(11) **EP 0 620 080 B1**
(45) Veröffentlichungstag und Bekanntmachung des Hinweises auf die Patenterteilung: **20.03.1996**
(21) Anmeldenummer: 94100322.0
(22) Anmeldetag: 12.01.1994
(51) Int. Cl.: B23Q 16/02, B65G 33/04

(54) **Vorrichtung für den Transport und die Positionierung von Werkstückträgern, die als Lineareinheit ausgeführt ist**
Device for the transport and positioning of work-piece carriers in the form of a linear unit
Dispositif pour le transport et le positionnement de porte-pièces, réalisé comme unité de déplacement linéaire

(30) Priorität: 18.03.1993 DE 4308576; 18.05.1993 DE 4316556
(43) Veröffentlichungstag der Anmeldung: 19.10.1994
(73) Patentinhaber: SIM ZUFÜHR-UND Montagetechnik GmbH & CO.KG, D-37308 Heilbad Heiligenstadt (DE)
(72) Erfinder: Dornieden, Georg, Dipl.-Ing. (FH), D-37318 Burgwalde (DE)
(74) Vertreter: Andrejewski, Walter, Dr.

(56) Entgegenhaltungen:
- EP-A- 0 089 543
- US-A- 2 789 683

## Beschreibung

Die Erfindung betrifft eine Vorrichtung für den Transport und die Positionierung von Werkstückträgern, die als Lineareinheit ausgeführt ist, - mit einer Antriebswelle, einem räumlichen Kurvengetriebe mit Stegkurve auf der Antriebswelle und einer Werkstückträgerführungseinrichtung, wobei die Werkstückträger kurvengetriebeseitig zwei an der Stegkurve geführte Rollen aufweisen, von denen eine Rolle als Führungsrolle mit fester Achse ausgeführt ist, wobei die Stegkurve des räumlichen Kurvengetriebes aus einem Transportabschnitt mit schraubenwendelförmiger Steigung und einem steigungsfreien Positionier- und Ruheabschnitt besteht und der Transportabschnitt sowie der Positionier- und Ruheabschnitt mit einem gekrümmten Übergangsstegabschnitt aneinander angeschlossen sind, wobei die Stegkurve des räumlichen Kurvengetriebes auf einer Mehrzahl von hohlwellenförmigen Modulen angeordnet ist, die drehfest auf die Antriebswelle aufgeschoben und mit stoßenden Teilstücken der Transportabschnitte auf dieser befestigt sind.

Bei der bekannten Vorrichtung, von der die Erfindung ausgeht (US-A-2 789 683) besteht die Stegkurve, die auch als Wulstkurve bezeichnet wird, aus einem Transportabschnitt mit schraubenwendelförmiger Steigung und einem steigungsfreien Positionier- und Ruheabschnitt. Der Transportabschnitt sowie der Positionier- und Ruheabschnitt sind mit einem gekrümmten Übergangsstegabschnitt aneinander angeschlossen. Die bekannten Vorrichtungen dieses Aufbaues und dieser Zweckbestimmung sind verbesserungsbedürftig, wenn die Vorrichtungen in moderne automatische Fertigungen mit hoher Stückleistung und kurzer Taktfolge integriert werden sollen und wenn darüber hinaus bei Umstellung der Fertigung auf unterschiedliche Kinematik auf einfache Weise ein Umrüsten durchführbar sein soll. In der modernen Fertigung sind Kurvengetriebe umfangreich im Einsatz (vgl. Zeitschrift iam, April 1993, S. 54, 55), jedoch hauptsächlich nicht als Lineareinheiten, sondern als drehende Einheiten. Die bekannten Vorrichtungen, die als Lineareinheit ausgeführt sind, zeigen bei hoher Stückleistung und kurzer Taktfolge störende Vibrationen und ruckartige Bewegungen. Ein einfaches Umrüsten ist nicht möglich.

Der Erfindung liegt die Aufgabe zugrunde, eine Vorrichtung des eingangs beschriebenen Aufbaues sowie der eingangs beschriebenen Zweckbestimmung so weiter auszubilden, daß sie in moderne automatische Fertigungen, die mit hoher Stückleistung und kurzer Taktfolge arbeiten, ohne weiteres eingesetzt werden können, und zwar auch dann, wenn bei Umstellung der Fertigung auf eine andere Kinematik auf einfache Weise ein Umrüsten durchgeführt werden muß.

Diese Aufgabe wird dadurch gelöst,
a) daß jedes Modul beidseits an den Positionier- und Ruheabschnitt anschließend ein Teilstück des Transportabschnittes aufweist,
b) daß die zweite Rolle als Vorspannrolle mit Vorspannfeder ausgeführt ist, welche Vorspannrolle die Führungsrolle an die zugeordnete Führungsfläche der Stegkurve andrückt,
c) und daß die Krümmung der Übergangsstegabschnitte und die Anschlußbereiche der Übergangsstegabschnitte an die anderen Teile der Stegkurve sowie die Vorspannkraft der Vorspannfeder so aufeinander abgestimmt sind, daß die Bewegung der Werkstückträger vibrationsfrei erfolgt und die zeitliche Ableitung der Bewegungskurve der Werkstückträger praktisch stetig verläuft.

Die Erfindung geht von der Erkenntnis aus, daß die Teilaufgabe, einfaches Umrüsten bei Umstellung der Fertigung auf eine von der eingerichteten Kinematik unterschiedliche Kinematik, ohne Schwierigkeiten gelöst werden kann, wenn in der beschriebenen Weise mit Modulen gearbeitet wird, die auf die Antriebswelle aufgesteckt und folglich leicht austauschbar sind. Obgleich zwischen den einzelnen Modulen Toleranzen unvermeidbar sind und auch beim Aufstecken Toleranzen in Kauf genommen werden müssen, lassen sich überraschenderweise ruckartige Bewegungen und Vibrationen vermeiden, wenn die Stegkurve auf den einzelnen Modulen so eingerichtet ist, wie es dem Merkmal a) entspricht, wenn darüber hinaus gemäß Merkmal b) verfahren wird und zusätzlich die beschriebene Abstimmungsregel verwirklicht wird. Vorgespannte Rollen sind bei Vorrichtungen für den Transport und die Positionierung von Werkstückträgern an sich bekannt, die erfindungsgemäße Vorspannung ist jedoch insoweit eine besondere, als eine als unbeweglich angeordnete Führungsrolle gelagert ist und dieser die Führungsfläche an der Stegkurve zugeordnet ist. Man kommt auf diese Weise zu einer sehr genauen Führung und über die Abstimmung ist erreichbar, daß störende ruckartige Bewegungen oder Vibrationen nicht auftreten. Es versteht sich, daß die Abstimmung die bewegten Massen und die Geschwindigkeiten berücksichtigen muß.

Im einzelnen bestehen im Rahmen der Erfindung mehrere Möglichkeiten der weiteren Ausbildung und Gestaltung. Im allgemeinen weist der Transportabschnitt der Stegkurve eine konstante Steigung auf. Dabei kann die Anordnung so getroffen werden, daß die Teilstücke von aneinander stoßenden Modulen Transportabschnitte bilden, die von Modulpaar zu Modulpaar unterschiedliche Steigung aufweisen. Ebenso können die Positionier- und Ruheabschnitte von aneinander stoßenden Modulen von Modul zu Modul eine unterschiedliche Länge aufweisen. Die Module der Vorrichtung können mit unterschiedlicher Folge und/oder in unterschiedlicher Anzahl zusammensetzbar sein.

Wie bereits erwähnt, kommt im Rahmen der Erfindung der Tatsache eine besondere Bedeutung zu, daß die Stegkurve die beschriebene Führungsfläche aufweist, die mit der achsfest angeordneten Führungsrolle wechselwirkt. Im Rahmen der Erfindung ist diese Führungsfläche mit besonders geringen Toleranzen sowie besonderer Oberflächenqualität bearbeitet. Die Vorspannrollen sind zweckmäßigerweise mit Vorspannfedern unterschiedlicher Vorspannkraft ausrüstbar und damit unterschiedlichen Besitzverhältnissen anpaßbar. Die Anordnung kann auch so getroffen sein, daß die Vorspannkraft der Vorspannfedern betriebsmäßig einstellbar ist. Die Vorspannrollen sind zweckmäßigerweise als Kugellager ausgeführt.

Bei der erfindungsgemäßen Vorrichtung kommt der Führungsrolle mit der festen Achse insofern besondere Bedeutung zu, als sie die Positionierung bestimmt. Die Vorspannrolle verbindet die Führungsrolle mit dem positionierenden Element, nämlich der Stegkurve, - und verhindert zusätzlich in Kombination mit den weiterhin beschriebenen Maßnahmen störende Vibrationen und ruckartige Bewegungen. Die Achse der Führungsrolle definiert so auf dem Werkstückträger einen festen Bezugspunkt für die Positonierung des Werkstückes, allgemeiner ausgedrückt, des Werkstücknestes für die Aufnahme des Werkstückes. Insoweit lehrt die Erfindung, daß die Führungsrolle mit fester Achse einen Achsbolzen aufweist, der in eine Bohrung des zugeordneten Werkstückträgers eingesetzt ist sowie die Bohrung durchfaßt, und wobei der Achsbolzen auf dem Werkstückträger den Positionierungsfestpunkt für ein auf dem Werkstückträger angeordnetes Werkstück bildet. Dabei kann das Werkstücknest zwischengeschaltet sein. Häufig kommt es darauf an, sicherzustellen, daß in der Folge der Werkstückträger die einzelnen Werkstücknester in den Positionierungs- und Ruheabschnitten sehr genau die gleiche Position einnehmen. Das erreicht man in weiterer Ausbildung der zuletzt beschriebenen Ausführungsform auf einfache Weise dadurch, daß alle Module identisch gleich ausgeführt und mit engen Toleranzen stirnseitig plangeschliffen sowie gegeneinander verspannt sind. Eine besonders aufwendige, toleranzarme Bearbeitung der Werkstückträger selbst längs des Werkstückträgerumfanges oder an den Stirnseiten ist in diesem Falle nicht erforderlich.

Im folgenden wird die Erfindung anhand einer lediglich ein Ausführungsbeispiel darstellenden Zeichnung ausführlicher erläutert. Es zeigen in schematischer Darstellung
- Fig. 1: die Seitenansicht einer erfindungsgemäßen Vorrichtung,
- Fig. 2: ein einzelnes Modul aus dem Gegenstand nach Fig. 1,
- Fig. 3: einen Schnitt in Richtung A-A durch den Gegenstand nach Fig. 1 und
- Fig. 4: einen Schnitt in Richtung B-B durch den Gegenstand nach Fig. 2.

Die in den Figuren dargestellte Vorrichtung dient für den Transport und zur Positionierung von Werkstückträgern 1 im Rahmen einer modernen automatischen Fertigung. Die Vorrichtung ist als sogenannte Linerareinheit ausgeführt.

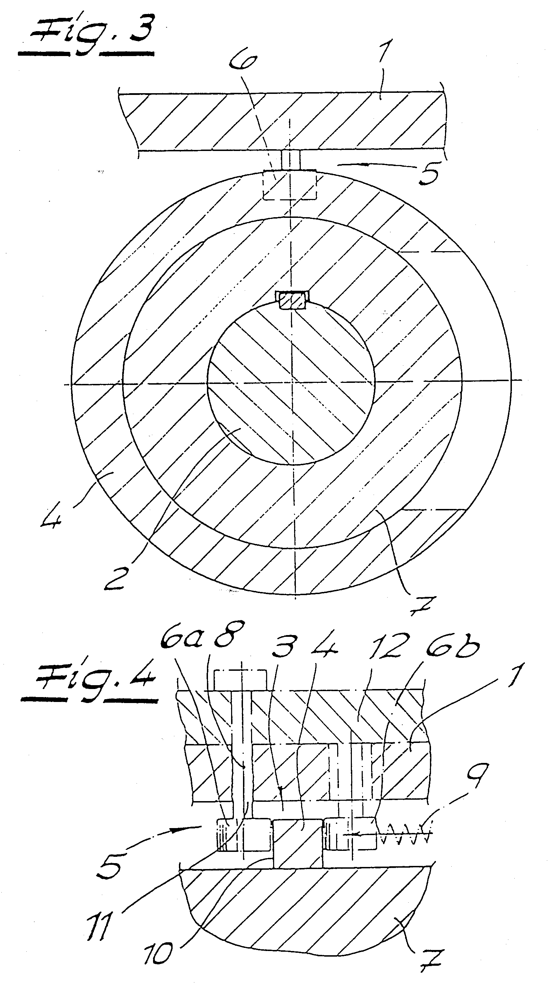

Zum grundsätzlichen Aufbau gehören eine Antriebswelle 2, ein räumliches Kurvengetriebe 3 mit Stegkurve 4 auf der Antriebswelle 2 und eine Werkstückträgerführungseinrichtung 5, wozu auf die Fig. 3 und 4 verwiesen wird. Im übrigen besitzen die Werkstückträger 1 kurvengetriebeseitig zwei an der Stegkurve 4 geführte Rollen 6.

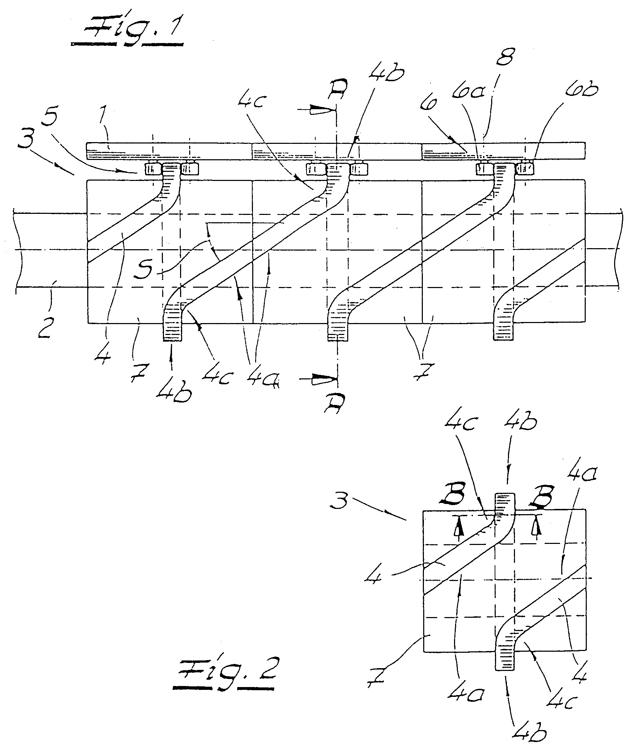

Die Stegkurve 4 des räumlichen Kurvengetriebes 3 besteht aus einem Transportabschnitt 4a mit schraubenwendelförmiger Steigung und einem steigungsfreien Positionier- und Ruheabschnitt 4b. Der Transportabschnitt 4a sowie der Positionier- und Ruheabschnitt 4b sind mit einem gekrümmten Übergangsstegabschnitt 4c aneinander angeschlossen. Man entnimmt aus einer vergleichenden Betrachtung der Fig. 1 und 2, daß die Stegkurve 4 des räumlichen Kurvengetriebes 3 auf einer Mehrzahl von hohlwellenförmigen Modulen 7 angeordnet ist, deren jedes einen vollen Positionier- und Ruheabschnitt 4b sowie beidseits an den Positionier- und Ruheabschnitt 4b anschließend ein Teilstück des Transportabschnittes 4a aufweist. Vorzugsweise ist der Transportabschnitt 4a hälftig geteilt, wie es auch die Figuren andeuten. Die Module 7 sind drehfest auf die Antriebswelle 2 aufgeschoben und mit stoßenden Teilstücken der Transportabschnitte 4a auf dieser befestigt. Den drehfesten Verbund der Module 7 auf der Antriebswelle 2 erkennt man in der Fig. 3.

In der Fig. 1 wurde angedeutet, daß von den beiden Rollen 6 des Werkstücksträgers 1 eine als Führungsrolle 6a mit fester Achse 8 ausgeführt ist, während die andere als Vorspannrolle 6b mit Vorspannfeder 9 ausgeführt ist. Die Vorspannkraft wirkt in Richtung des eingezeichneten Pfeiles. Die Vorspannrolle 6b drückt die Führungsrolle 6a an die zugeordnete Führungsfläche 10 der Stegkurve 4.

Wie bereits erwähnt erfolgt eine besondere Abstimmung. Die Krümmung der Übergangsstegabschnitte 4c und die Anschlußbereiche der Übergangsstegabschnitte 4c an die zugeordneten Teile der Stegkurve 4 sowie die Vorspannkraft der Vorspannfeder 9 sind so aufeinander abgestimmt, daß die Bewegung der Werkstückträger 1 ausreichend vibrationsfrei erfolgt und daß die erste zeitliche Ableitung der Bewegungskurve der Werkstückträger 1 in diesem Bereich praktisch stetig verläuft. Die Abstimmung erfolgt selbstverständlich unter Berücksichtigung der bewegten Masse und der Transportgeschwindigkeit. Die Abstimmung kann rechnerisch mit den Hilfsmitteln der modernen technischen Mechanik oder im Labor durchgeführt werden.

Im Ausführungsbeispiel und nach bevorzugter Ausführungsform der Erfindung besitzen die Transportabschnitte 4a eine konstante Steigung S. Der Fachmann erkennt in den Figuren, daß die Teilstücke von aneinander stoßenden Modulen 7 Transportabschnitte 4a bilden, die auch von Modulpaar zu Modulpaar eine unterschiedliche Steigung S aufweisen könnten. Außerdem könnten die Positionier- und Ruheabschnitte 4b von aneinander stoßenden Modulen von Modul 7 zu Modul 7 eine unterschiedliche Länge aufweisen. Die Figuren lassen fernerhin erkennen, daß die Module 7 leicht ausgetauscht werden können, das gilt auch für die Vorspannfedern 9, die außerdem einstellbar sein können. Die Führungsflächen 10 der Stegkurve 4 sind mit besonders geringen Toleranzen sowie besonderer Oberflächenqualität bearbeitet.

In der Fig. 4 wurde angedeutet, daß die Führungsrolle 6a mit fester Achse 8 einen Achsbolzen 11 aufweist, der in eine Bohrung des zugeordneten Werkstückträgers 1 eingesetzt ist sowie die Bohrung durchfaßt, wobei der Achsbolzen 11 auf dem Werkstückträger 1 den Positionierungsfestpunkt für ein auf dem Werkstückträger angeordnetes Werkstücknest bildet. Die gegeneinandergesetzten Module 7 sind stirnseitig plangeschliffen sowie gegeneinander verspannt.

## Patentansprüche

1. Vorrichtung für den Transport und die Positionierung von Werkstückträgern (1), die als Lineareinheit ausgeführt ist, - mit einer Antriebswelle (2), einem räumlichen Kurvengetriebe (3) mit Stegkurve (4) auf der Antriebswelle (2) und einer Werkstückträgerführungseinrichtung (5), wobei die Werkstückträger (1) kurvengetriebeseitig zwei an der Stegkurve (4) geführte Rollen (6) aufweisen, von denen eine Rolle als Führungsrolle (6a) mit fester Achse (8) ausgeführt ist, wobei die Stegkurve (4) des räumlichen Kurvengetriebes (3) aus einem Transportabschnitt (4a) mit schraubenwendelförmiger Steigung (S) und einem steigungsfreien Positionier- und Ruheabschnitt (4b) besteht und der Transportabschnitt (4a) sowie der Positionier- und Ruheabschnitt (4b) mit einem gekrümmten Übergangsstegabschnitt (4c) aneinander angeschlossen sind, wobei die Stegkurve (4) des räumlichen Kurvengetriebes (3) auf einer Mehrzahl von hohlwellenförmigen Modulen (7) angeordnet ist, die drehfest auf die Antriebswelle (2) aufgeschoben und mit stoßenden Teilstücken der Transportabschnitte (4a) auf dieser befestigt sind, **dadurch gekennzeichnet**, daß
a) jedes Modul (7) beidseits an den Positionier- und Ruheabschnitt (4b) anschließend ein Teilstück des Transportabschnittes (4a) aufweist,
b) daß die zweite Rolle als Vorspannrolle (6b) mit Vorspannfeder (9) ausgeführt ist, welche Vorspannrolle (6b) die Führungsrolle (6a) an die zugeordnete Führungsfläche (10) der Stegkurve (4) andrückt,
c) und daß die Krümmung der Übergangsstegabschnitte (4c) und die Anschlußbereiche der Übergangsstegabschnitte (4c) an die anderen Teile der Stegkurve (4) sowie die Vorspannkraft der Vorspannfeder so aufeinander abgestimmt sind, daß die Bewegung der Werkstückträger (1) vibrationsfrei erfolgt und die zeitliche Ableitung der Bewegungskurve der Werkstückträger (1) praktisch stetig verläuft.

2. Vorrichtung nach Anspruch 1, wobei der Transportabschnitt (4a) eine konstante Steigung (S) aufweist.

3. Vorrichtung nach einem der Ansprüche 1 oder 2, wobei die Teilstücke von aneinander stoßenden Modulen (7) Transportabschnitte (4a) bilden, die von Modulpaar zu Modulpaar unterschiedliche (S) Steigung aufweisen.

4. Vorrichtung nach einem der Ansprüche 1 bis 3, wobei die Positionier- und Ruheabschnitte (4b) von aneinander stoßenden Modulen von Modul (7) zu Modul (7) eine unterschiedliche Länge aufweisen.

5. Vorrichtung nach einem der Ansprüche 1 bis 4, wobei die Module (7) der Vorrichtung in unterschiedlicher Folge und/oder unterschiedlicher Anzahl zusammensetzbar sind.

6. Vorrichtung nach einem der Ansprüche 1 bis 5, wobei die Führungsfläche (10) der Stegkurve (4) mit besonders geringen Toleranzen sowie besonderer Oberflächenqualität bearbeitet ist.

7. Vorrichtung nach einem der Ansprüche 1 bis 6, wobei die Vorspannrollen (6b) mit Vorspannfedern (9) unterschiedlicher Vorspannkraft ausrüstbar sind.

8. Vorrichtung nach einem der Ansprüche 1 bis 7, wobei die Vorspannkraft der Vorspannfedern (9) einstellbar ist.

9. Vorrichtung nach einem der Ansprüche 1 bis 8, wobei die Führungsrolle (6a) mit fester Achse (8) einen Achsbolzen (11) aufweist, der in eine Bohrung des zugeordneten Werkstückträgers (1) eingesetzt ist, sowie die Bohrung durchfaßt, und wobei der Achsbolzen (11) auf dem Werkstückträger (1) den Positionierungsfestpunkt für ein auf dem Werkstückträger (1) angeordnetes Werkstücknest bildet.

10. Vorrichtung nach Anspruch 9, wobei alle Module (7) identisch gleich ausgeführt und mit engen Toleranzen stirnseitig plangeschliffen sowie gegeneinander verspannt sind.

## Claims

1. An apparatus for the transport and positioning of workpiece carriers (1) which is designed as a linear unit, - having a drive shaft (2), a three-dimensional cam drive (3) with a path cam (4) on the drive shaft (2) and a workpiece carrier guidance device (5), wherein the workpiece carriers (1) have two rollers (6) on the cam drive side which are guided on the path cam (4), one of which rollers is designed as a guide roller (6a) with a fixed axis (8), wherein the path cam (4) of the three-dimensional cam drive (3) consists of a transport section (4a) having a helical slope (S) and of a slope-free positioning and support section (4b), and the transport section (4a) and the positioning and support section (4b) are connected to each other by a curved transition path section (4c), wherein the path cam (4) of the three-dimensional cam drive (3) is disposed on a plurality of modules (7) in the form of hollow shafts which are slid rotationally fixed on to the drive shaft (2) and are fixed to the latter with portions of the transport sections (4a) abutting, characterised in that
a) each module (7) comprises, on both sides, a portion of the transport section (4a) which adjoins the positioning and support section (4b),
b) that the second roller is designed as a biassing roller (6b) having a biassing spring (9), which biassing roller (6b) presses the guide roller (6a) on to the associated guide face (10) of the path cam (4),
c) and that the curvature of the transition path sections (4c), the regions of the transition path sections (4c) connecting them to the other parts of the path cam (4), and the biassing force of the biassing spring are matched to each other so that the motion of the workpiece carriers (1) is executed free from vibration and the derivative with respect to time of the curve of motion of the workpiece carriers (1) is practically constant.

2. An apparatus according to claim 1, wherein the transport section (4a) has a constant slope (S).

3. An apparatus according to either one of claims 1 or 2, wherein the portions of mutually abutting modules (7) form transport sections (4a) which have a different slope (S) from module pair to module pair.

4. An apparatus according to any one or claims 1 to 3, wherein the positioning and support sections (4b) of mutually abutting modules are of different length from module (7) to module (7).

5. An apparatus according to any one of claims 1 to 4, wherein the modules (7) of the apparatus can be assembled in a different sequence and/or in different numbers.

6. An apparatus according to any one of claims 1 to 5, wherein the guide race (10) of the path cam (4) is machined to particularly low tolerances and with a particular surface quality.

7. An apparatus according to any one of claims 1 to 6, wherein the biassing rollers (6b) can be fitted with biassing springs (9) of different biassing force.

8. An apparatus according to any one of claims 1 to 7, wherein the biassing force of the biassing springs (9) is adjustable.

9. An apparatus according to any one of claims 1 to 8, wherein the guide roller (6a) with the fixed axis (8) has a spindle pin (11) which is inserted in a bore in the associated workpiece carrier (1) and passes through the bore, and wherein the spindle pin (11) forms the fixed positioning point on the workpiece carrier (1) for a workpiece cluster disposed on the workpiece carrier (1).

10. An apparatus according to claim 9, wherein all the modules (7) are of the same identical design and are flat-ground with narrow tolerances on their end faces and are braced against each other.

## Revendications

1. Dispositif pour le transport et le positionnement de supports de pièces (1), réalisé sous la forme d'une unité linéaire, comportant un arbre d'entraînement (2), une commande à cames tridimensionnelle (3) avec came-collerette (4) sur l'arbre d'entraînement (2) et un mécanisme de guidage de support de pièce (5), dans lequel les supports de pièces (1) présentent, du côté de la commande à cames, deux galets (6) guidés sur la came-collerette (4), dont l'un est réalisé sous la forme d'un galet de guidage (6a) avec un axe fixe (8), la came-collerette (4) de la commande à cames tridimensionnelle (3) se composant d'un tronçon de transport (4a) avec une rampe hélicoïdale (5) et un tronçon de positionnement et de repos (4b) exempt de rampe, le tronçon de transport (4a) ainsi que le tronçon de positionnement et de repos (4b) étant mutuellement raccordés par un tronçon de transition courbe (4c), la came-collerette (4) de la commande à cames tridimensionnelle (3) étant disposée sur une pluralité de modules (7) en forme d'arbre creux qui sont enfilés sur l'arbre d'entraînement (2), calés sur lui, et fixés au tronçon de transport (4a) par des parties en butée de celui-ci, caractérisé en ce que
a) chaque module (7) présente une partie du tronçon de transport (4a) des deux côtés à la suite du tronçon de positionnement et de repos (4b)
b) le deuxième galet est réalisé sous la forme d'un galet de précontrainte (6b) avec un ressort de précontrainte (9), le galet de précontrainte (6b) appliquant le galet de guidage (6a) sur la surface de guidage associée (10) de la came-collerette (4)
c) et la courbure des tronçons de transition (4c) et les zones de raccordement des tronçons de transition (4c) aux autres parties de la came-collerette (4) ainsi que la force de précontrainte du ressort de précontrainte sont mutuellement adaptées de telle sorte que le mouvement du support de pièce (1) s'effectue sans vibrations, et la dérivée par rapport au temps de la courbe de mouvement du support de pièce (1) a une allure pratiquement continue.

2. Dispositif selon la revendication 1, caractérisé en ce que le tronçon de transport (4a) présente une rampe (S) de pente constante.

3. Dispositif selon l'une des revendications 1 ou 2, dans lequel les parties de modules (7) en butée mutuelle forment des tronçons de transport (4a) qui présentent, de paire de modules à paire de modules, des rampes (S) de pentes différentes.

4. Dispositif selon l'une des revendications 1 à 3, dans lequel les tronçons de positionnement et de repos (4b) de modules en butée mutuelle présentent une longueur différente de module à module.

5. Dispositif selon l'une des revendications 1 à 4, dans lequel les modules (7) du dispositif sont assemblables selon une succession différente et/ou un nombre différent.

6. Dispositif selon l'une des revendications 1 à 5, dans lequel la surface de guidage (10) de la came-collerette (4) est usinée avec des tolérances particulièrement étroites ainsi qu'avec une qualité de surface particulière.

7. Dispositif selon l'une des revendications 1 à 6, dans lequel les galets de précontrainte (6b) peuvent être équipés de ressorts de précontrainte (9) ayant des forces de précontrainte différentes.

8. Dispositif selon l'une des revendications 1 à 7, dans lequel la force de précontrainte des ressorts de précontrainte (9) est réglable.

9. Dispositif selon l'une des revendications 1 à 8, dans lequel les galet de guidage (6a) à axe fixe (8) présente une tige d'axe (11) qui est mise en place dans un perçage du support de pièce associé (1) et dépasse du perçage, la tige d'axe (11) formant sur le support de pièce (1) le point fixe de positionnement pour un berceau de pièce disposé sur le support de pièce (1).

10. Dispositif selon la revendication 9, dans lequel tous les modules (7) sont réalisés de manière identique, sont soumis à une rectification plane avec des tolérances étroites sur les surfaces frontales et sont serrés mutuellement.
